# EUROPEAN PATENT APPLICATION

(11) **EP 2 760 176 A1**
(43) Date of publication of application: **30.07.2014**
(21) Application number: 13152352.4
(22) Date of filing: 23.01.2013
(51) Int. Cl.: H04L 29/06

(54) **Flash video enabler for iOS devices**

(71) Applicant: Vodafone Holding GmbH, 40213 Düsseldorf (DE)
(72) Inventor: Singh, Rajiv, D-40545 Düsseldorf (DE); Munoz, Oscar, D-40476 Düsseldorf (DE)
(74) Representative: Jostarndt, Hans-Dieter

(57) **Abstract**

The invention relates to a system to enable playing flash video content in an iOS environment, to a server used in this system and to a corresponding method. The system comprises an iOS based user terminal (2) comprising a browser to establish (E1) an internet connection (3) to a first server (4) providing access of the user terminal (2) to user requested websites (5, 5') containing flash videos, the first server (4) being adapted to recognize (R) flash video objects if present on the user requested websites (5, 5') and to transmit a modified content (5a) of the requested website (5) to the user terminal (2) in case of recognized (R) flash video content, where the flash video content of the requested website (5) is replaced (RP) by a reference (5b) suitable to access a second server (6) providing video content playable on the iOS based user terminal (2), the browser of the user terminal (2) being adapted to establish (E2) a connection (7) to the second server (6) via the transmitted reference (5b) in case of the user of the terminal (2) uses a start button present within the transmitted content (5a) of the requested website (5) displayed on the user terminal (2) in order to play the video content, and the second server (6) being adapted to transmit (T) a video (9) in a format playable on the iOS based user terminal (2) comprising the content of the original flash video to the user terminal (2) in response to the use of the start button displayed on the user terminal (2).

## Description

### Field of the invention

The invention relates to a system to enable playing flash video content in an iOS environment, to a first server used in this system and to a corresponding method.

### Background of the invention

Flash Video is a container file format used to deliver video over the internet using Adobe Flash Players. Flash Video has been accepted as a default online video format by many sites. Notable users of it include YouTube, Hulu, VEVO, Yahoo! Video, metacafe, Reuters.com, and many other news providers. Flash Video is viewable on most operating systems via the Adobe Flash Player and web browser plugin or one of several third-party-programs. However Apple iOS devices do not support the Flash Player plugin. The iOS handsets (Apple iPhone, iPad and iPod Touch) are not able to play flash video because the devices doesn't allow the installation of the necessary Flash plug-in, e.g. see website http://www.apple.com/hotnews/thoughts-on-flash/. Apple claims that Flash content is not thought for mobile devices. However, user may like to access Flash videos available on YouTube, Hulu, VEVO, Yahoo! Video, metacafe, Reuters.com also on their iOS devices.

Solutions are currently available to play Flash videos on iOS devices. She Skyfire browser (http://www.skyfire.com/en/for-consumers/iphone/iphone) also enables the iPhone and iPad to play flash video but it is necessary to download and install an application on the device. It is a valid approach but it requires an action from the user, besides it only works obviously when accessing the Internet using this specific web browser.

We have designed a network solution that has the capability to detect the Flash video before the user receives the error message and replace it by a video format that can be played on iOS devices with the default player, i.e. without the installation of any plug-in or software component. The solution will then overcome the technical limitations transparently to the end users.

### Summary of the invention

It is an object of the invention to provide a system enabling playing flash video content in an iOS environment. It is another object of the invention to provide a suitable server enabling playing flash video content in an iOS environment. It is a further object of the invention to provide a method enabling playing flash video content in an iOS environment.

This object is solved by a system to enable playing flash video content in an iOS environment comprising
- an iOS based user terminal comprising a browser to establish an internet connection to a first server providing access of the user terminal to user requested websites containing flash videos;
- the first server being adapted to recognize flash video objects if present on the user requested websites and to transmit a modified content of the requested website to the user terminal in case of recognized flash video content, where the flash video content of the requested website is replaced by a reference suitable to access a second server providing video content playable on the iOS based user terminal;
- the browser of the user terminal being adapted to establish a connection to the second server via the transmitted reference in case of the user of the terminal uses a start button present within the transmitted content of the requested website displayed on the user terminal in order to play the flash video content; and
- the second server being adapted to transmit a video in a format playable on the iOS based user terminal comprising the content of the original flash video to the user terminal in response to the use of the start button displayed on the user terminal.

The first server can be any suitable server to provide access to requested websites and to transmit the content of the requested websites to the user terminal and being capable to detect Flash video and to insert the redirection to the second server. The second server can be any suitable server providing video content playable on the iOS based user terminal. In an embodiment the second server is a Skyfire server. The iOS environment is provided by the iOS based user terminal.

The term "iOS" (or iPhone OS) denotes a mobile operating system (OS) developed and distributed by Apple Inc. originally released for iPhones and iPods. It has been extended to support other Apple devices such as the iPads and Apple TVs. The user interface of iOS is based on the concept of direct manipulation, using multi-touch gestures. Interface control elements consist of sliders, switches, and buttons. Interaction with the OS includes gestures such as swipe, tap, pinch, and reverse pinch, all of which have specific definitions within the context of the iOS operating system and its multi-touch interface. Internal accelerometers are used by some applications to respond to shaking the device (one common result is the undo command) or rotating it in three dimensions (one common result is switching from portrait to landscape mode). The iOS handsets (Apple iPhone, iPad and iPod Touch) according to state of the art are not able to play flash video because the device doesn't allow the installation of the necessary Flash plug-in

The recent invention provides a system having the capability to detect the one or more flash video objects present on a requested website before the user receives an error message while trying to display the website on the iOS based user terminal as common for state-of-the-art-systems and to replace it by a video format that can be played on iOS based user terminals with a default player present on the iOS based user terminal, i.e. without the installation of any plug-in or software component. The system according to the present invention overcomes the technical limitations of iOS based user terminals without any required user interaction. The user uses the start button in order to play the alleged flash video. As a result of using the start button, a corresponding content in a displayable format will be played on the user terminal without notifying the user about this exchange. As an example, flash animated objects might be replaced by a Javascript objects.

With the present invention no Skyfire browser has to be downloaded and installed on the iOS based user terminal to enable the iOS based user terminal to play flash video. The iOS based user terminal can access the internet using any web browser without facing problems when accessing flash video content. The user can work with the native browser of the terminal. The advantage of the solution of the present invention is that it is performed in the network and thus does not require the installation of any software on the user terminal. The display of the flash video happens using the native browser of the handset without installing any plug-in. Therefore when enabled in a specific operator's network, it will work for all of the subscribers using the targeted terminals (or devices) connected through that operator's network.

In an embodiment of the system the first server providing access to requested websites comprises a software application suitable to analyze the requested website before the content is transmitted to the user terminal in order to recognize present flash video objects. The term "comprising a software application" denotes a software application installed and executed on the first server. The software application can be installed on the first server without any limitations provided by the user terminals, since the software application checks the content received by the first server. The software application is not responsible to provide displayable content to the user terminal. The terms "flash video", "flash video content" or "flash video objects" all denotes videos not playable in an iOS environment.

In another embodiment of the system the reference replacing the flash video content is not visible to users. The users are not aware to the procedures executed during transmission of the requested website, which enhances the customer satisfaction. In another embodiment the transmitted reference is a link, preferably a modified URL.

In another embodiment of the system the link is a modified URL and the first server is adapted to generate a video tag markup added as a domain prefix to the URL pointing to the second server (e.g. a Skyfire server) allowing the browser of the user terminal to consume the content of the requested website without displaying any messages related to flash videos. The system according to the present invention uses the resources of the second server providing displayable video content as replacement for corresponding flash video content. Therefore the present solution minimizes the additionally required resources to enable the iOS based user terminals to play flash video content. The URL replacing the flash video content of the requested website provides direct and easy access to the second server and is a hidden reference with respect to the user being invisible for the user.

The process of identifying the Flash video objects works as explained hereinafter: There is a component running on the first server that:
A) detects the presence of SWF as Flash video player in the source code of the web page. This can be achieved by testing combination of Flashvars and SWF filename; by testing combination of Video-Site-URL, Video-Site-Title, Flashvars and / or SWF filename; by downloading & parsing SWF-file and test the metadata of the parsetreefor various packages, classes and /or methods; and by executing the SWF-file on the server.
B) discovers video stream URLs. This is done by extracting information from the passed Flashvars, Video-Site-URL type of Video-Player and/or the content of the Video-Site-URL.
C) generates HTML5 video markup with the reference to the second server

The invention further relates to a first server to enable playing flash video content in an iOS environment, wherein
- the first server being adapted to establish an internet connection to an iOS based user terminal and to provide user request websites containing flash videos to a browser of the user terminal; and
- the first server being adapted to recognize flash video objects if present on the user requested websites and to transmit a modified content of the requested website to the user terminal in case of recognized flash video content, where the flash video content of the requested website is replaced by a reference suitable to access a second server providing video content playable on the iOS based user terminal when the user of the terminal uses a start button present within the transmitted content of the requested website displayed on the user terminal.

The user uses the start button in order to play the alleged flash video. As a result of using the start button, a corresponding content in a displayable format will be played on the user terminal without notifying the user about this replacement.

In another embodiment the first server providing access to requested websites comprises a software application suitable to analyze the requested website, before the content is transmitted to the user terminal in order to recognize present flash video objects. In another embodiment the reference is not visible to users. In another embodiment the transmitted reference is a link, preferably a modified URL.

In another embodiment the link is a modified URL and the first server is adapted to generate a video tag markup added as a domain prefix to the URL pointing to the second server allowing the browser of the user terminal to consume the content of the requested website without displaying any messages related to flash videos. Since the resources of the second server are used to provide displayable video content as replacement for corresponding flash video content, the resources of the first server according to the present invention are not affected. The URL replacing the flash video content of the requested website provides direct and easy access to the second server avoiding any further communication between the first server and the iOS based user terminal.

The invention further relates to a method to enable playing flash video content in an iOS environment comprising
- establishing an internet connection between a first server and an iOS based user terminal via a browser of the user terminal to provide access of the user terminal to user requested websites containing flash videos;
- recognize flash video objects if present on the user requested websites by the first server;
- and in case of recognized flash video content replacing the flash video content of the requested website by a reference suitable to access a second server providing video content playable on the iOS based user terminal by the first server and transmitting the modified content of the requested website to the user terminal;
- establishing a connection to the second server by the browser of the user terminal via the transmitted reference in case of the user of the terminal uses a start button present within the transmitted content of the requested website displayed on the user terminal in order to play the flash video content;
- transmit a video in a format playable on the iOS based user terminal comprising the content of the original flash video to the user terminal by the second server in response to the use of the start button displayed on the user terminal; and
- playing the transmitted video on the iOS based user terminal.

In an embodiment the method further comprises the step of executing a software application on the first server providing access to requested websites to analyze the requested website in order to recognize present flash video objects. In another embodiment of the method the reference is not visible to users. In another embodiment the method further comprises the step of transmitting the reference to the user terminal as a modified URL.

In an embodiment the method further comprises the steps of generating and adding a video tag markup as a domain prefix to the URL pointing to the second server allowing the browser of the user terminal to consume the content of the requested website without displaying any messages related to flash videos.

### Brief description of the drawings

These and other aspects of the invention will be apparent from and elucidated with reference to the embodiments described hereinafter.
- Fig.1:: an embodiment of the system according to the present invention;
- Fig.2:: an embodiment of the method according to the present invention.

### Detailed description of embodiments

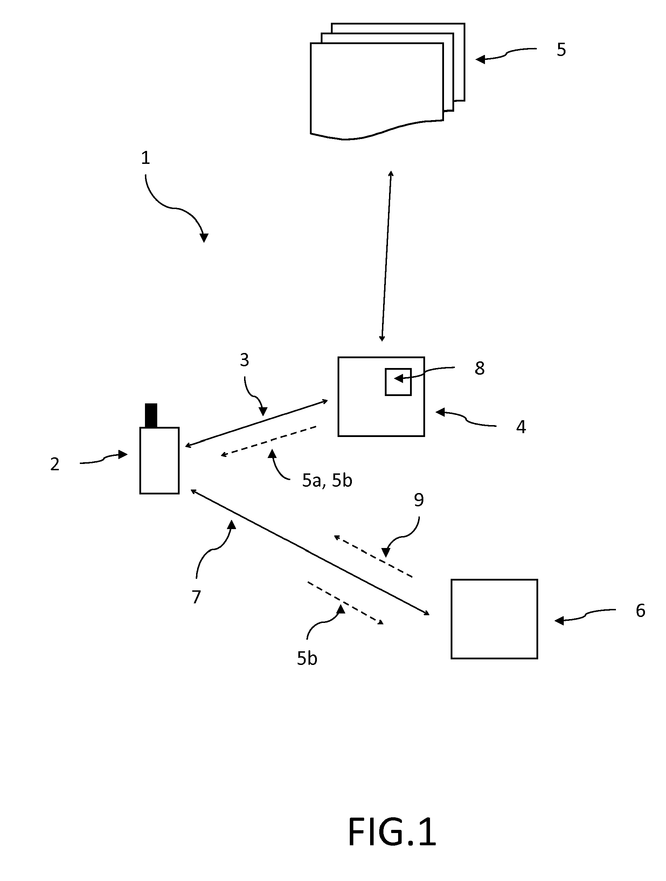

Fig.1 shows a system 1 to enable playing flash video content in an iOS environment comprising an iOS based user terminal 2 comprising a browser to establish an internet connection 3 to a first server 4 providing access of the user terminal 2 to user requested websites 5 containing flash videos, where the first server 4 being adapted to recognize flash video objects present on the user requested websites 5 and to transmit a modified content 5a of the requested website 5 to the user terminal 2, where the flash video content of the requested website 5 is replaced by a reference 5b suitable to access a second server 6 providing video content playable on the iOS based user terminal 2. The reference, preferably a hidden reference, might be a link, more preferably a modified URL comprising an indication of the particular video content. The browser of the user terminal 2 is adapted to establish a connection 7 to the second server 6 via the transmitted reference 5b in case of the user of the terminal 2 uses a start button present within the transmitted content 5a of the requested website 5 displayed on the user terminal 2 in order to play the video content. The user terminal comprises a touch screen, where touching the displayed start button results in starting to play the video content. The second server 6 is adapted to transmit a video 9 in a format playable on the iOS based user terminal 2 comprising the content of the original flash video to the user terminal 2 in response to the use of the start button displayed on the user terminal 2. The first server 4 may comprise a software application 8 suitable to analyze the requested website 5 in order to recognize present of a flash video objects before the content is transmitted to the user terminal 2. The link 5b as the reference might be a modified URL and the first server 4 is adapted to generate a video tag markup added as a domain prefix to the URL 5b pointing to the second server 6 allowing the browser of the user terminal 2 to consume the content of the requested website 5 without displaying any messages related to flash videos.

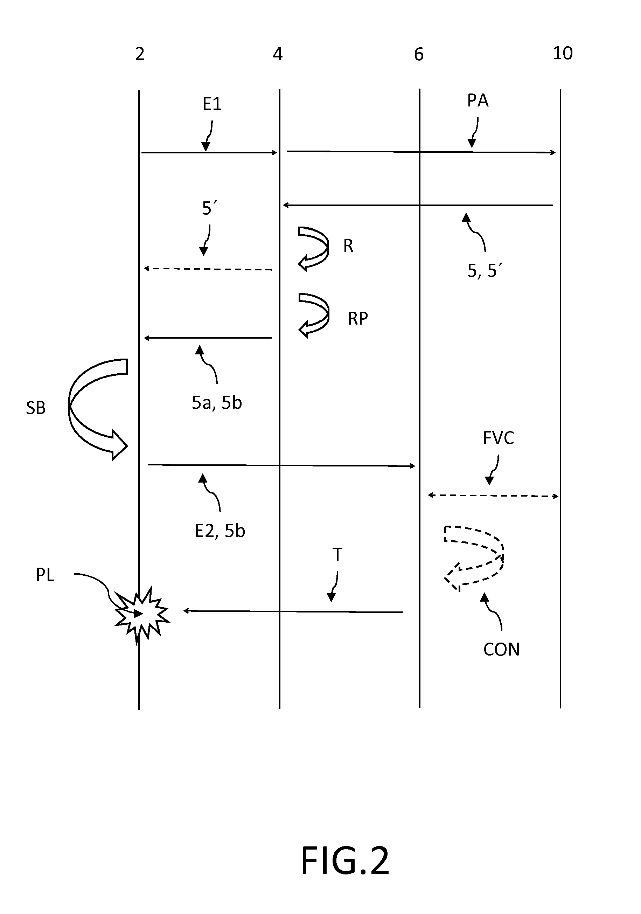

Fig.2 shows an embodiment of the method in accordance to the present invention comprising establishing E1 of an internet connection 3 between a first server 4 and an iOS based user terminal 2 via a browser of the user terminal 2 to provide access PA of the user terminal 2 to user requested websites 5, 5' containing flash videos and recognizing R flash video objects if present on the user requested websites 5, 5' by the first server. In case of no present flash video content, the requested website 5' is transmitted to the iOS based user terminal 2 without any modification. In case of recognized R flash video content. the flash video content of the requested website 5 is replaced RP by a reference 5b suitable to access a second server 6 providing video content playable on the iOS based user terminal 2 by the first server 4. Subsequently the modified content 5a of the requested website 5 comprising the reference 5b is transmitted T to the user terminal 2. In case of the user of the terminal 2 uses ST a start button present within the transmitted content 5a of the requested website 5 displayed on the user terminal 2 in order to play the video content, a connection 7 is established E2 to the second server 6 by the browser of the user terminal 2 via the transmitted reference 5b and a video 9 in a format playable on the iOS based user terminal 2 comprising the content of the original flash video to the user terminal 2 is transmitted T by the second server 6 in response to the use ST of the start button displayed on the user terminal. Subsequently the transmitted T video content is played PL on the iOS based user terminal 2. In case of the second server not comprising a video in a playable format corresponding to the flash video, the second server may access FVC the original flash video and will convert the flash video content into a video format playable on the iOS based user terminal. After conversion, the playable video content is stored on the second server and transmitted T to the iOS based user terminal 2.

As an example the method (and system) uses a Multi Services Proxy server as the first server 4 (e.g. a MSP provided by Bytemobile) and the Skyfire Rocket Optimizer. All the TCP port 80 traffic is forwarded to the MSP 4. The software application to analyze the requested website 5, 5' in order to recognize R flash video content might be software developed by Uxebu. The MSP 4 then modifies the reference to the flash video in a way that the browser installed on the iOS based user terminal 2 doesn't show an error message, but the usual start button "play" instead. If the user decides to play the video, then the modified reference 5b doesn't go to the content provider's server directly, but it is forwarded to the second server 6, e.g. hosted by Skyfire. The Skyfire Rocket Optimizer requests the video then and converts it online to HLS (HTTP Live Streaming) format. The chunks of the video in the new format are sent to the MSP 4 and from there to the iOS based user terminal 2. The Skyfire Rocket Optimizer might be installed on the second server 6 or also additionally on the first server 4.

While the invention has been illustrated and described in details in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference sign in the claims should not be construed as limiting the scope.

### List of reference signs

- 1: system in accordance to the present invention
- 2: iOS based user terminal
- 3: internet connection between user terminal and first server
- 4: first server
- 5: requested website
- 5': requested website not comprising flash video content
- 5a: modified content of the requested website
- 6: second server
- 7: connection between user terminal and second server
- 8: software application
- 9: video transmitted from the second server having a content corresponding to the original flash video content
- 10: Internet

- E1: establishing an internet connection between iOS based user terminal and first server
- E2: establishing an internet connection between iOS based user terminal and second server
- PA: providing access to websites
- PL: playing the video content transmitted from the second server on the iOS based user terminal
- R: recognizing flash video content on requested website
- RP: replacing flash video content by a reference
- ST: using the start button
- T: transmitting a video playable on the iOS based user terminal

## Claims

1. A system (1) to enable playing flash video content in an iOS environment comprising
- an iOS based user terminal (2) comprising a browser to establish (E1) an internet connection (3) to a first server (4) providing access of the user terminal (2) to user requested websites (5, 5') containing flash videos,
- the first server (4) being adapted to recognize (R) flash video objects if present on the user requested websites (5, 5') and to transmit a modified content (5a) of the requested website (5) to the user terminal (2) in case of recognized (R) flash video content, where the flash video content of the requested website (5) is replaced (RP) by a reference (5b) suitable to access a second server (6) providing video content playable on the iOS based user terminal (2),
- the browser of the user terminal (2) being adapted to establish (E2) a connection (7) to the second server (6) via the transmitted reference (5b) in case of the user of the terminal (2) uses a start button present within the transmitted content (5a) of the requested website (5) displayed on the user terminal (2) in order to play the video content, and
- the second server (6) being adapted to transmit (T) a video (9) in a format playable on the iOS based user terminal (2) comprising the content of the original flash video to the user terminal (2) in response to the use of the start button displayed on the user terminal (2).

2. The system (1) as claimed in claim 1, **characterized in that** the first server (4) providing access to requested websites (5) comprises a software application (8) suitable to analyze the requested website (5) before the content is transmitted to the user terminal (2) in order to recognize present flash video objects.

3. The system (1) as claimed in claim 1 or 2, **characterized in that** the reference (5b) is not visible to users.

4. The system (1) as claimed in any of the preceding claims, **characterized in that** the transmitted reference (5b) is a link, preferably a modified URL.

5. The system (1) as claimed in claim 4, **characterized in that** the link (5b) is a modified URL and the first server (4) is adapted to generate a video tag markup added as a domain prefix to the URL (5b) pointing to the second server (6) allowing the browser of the user terminal (2) to consume the content of the requested website (5) without displaying any messages related to flash videos.

6. A first server (4) to enable playing flash video content in an iOS environment, wherein
- the first server (4) being adapted to establish an internet connection (3) to an iOS based user terminal (2) and to provide user request websites (5) containing flash videos to a browser of the user terminal (2),
- the first server (4) being adapted to recognize flash video objects if present on the user requested websites (5) and to transmit a modified content (5a) of the requested website (5) to the user terminal (2) and in case of recognized flash video content, where the flash video content of the requested website (5) is replaced by a reference (5b) suitable to access a second server (6) providing video content (9) playable on the iOS based user terminal (2) when the user of the terminal (2) uses a start button present within the transmitted content of the requested website (5) displayed on the user terminal (2).

7. The first server (4) as claimed in claim 6, **characterized in that** the first server (4) providing access to requested websites (5) comprises a software application (8) suitable to analyze the requested website (5), before the content is transmitted to the user terminal (2 in order to recognize present flash video objects.

8. The first server (4) as claimed in claim 6 or 7, **characterized in that** the reference (5b) is not visible to users.

9. The first server (4) as claimed in any of claims 6 to 8, **characterized in that** the transmitted reference (5b) is a link, preferably a modified URL (5b).

10. The first server as claimed in claim 9, **characterized in that** the link (5b) is a modified URL and the first server (4) is adapted to generate a video tag markup added as a domain prefix to the URL (5b) pointing to the second server (6) allowing the browser of the user terminal (2) to consume the content of the requested website (5) without displaying any messages related to flash videos.

11. A method to enable playing flash video content in an iOS environment comprising
- establishing (E1) an internet connection (3) between a first server (4) and an iOS based user terminal (2) via a browser of the user terminal (2) to provide access (PA) of the user terminal (2) to user requested websites (5, 5') containing flash videos;
- recognizing (R) flash video objects if present on the user requested websites (5, 5') by the first server (4),
- and in case of recognized (R) flash video content replacing (RP) the flash video content of the requested website (5) by a reference (5b) suitable to access a second server (6) providing video content playable on the iOS based user terminal (2) by the first server (4) and transmitting the modified content (5a) of the requested website (5) to the user terminal (2),
- establishing (E2) a connection (7) to the second server (6) by the browser of the user terminal (2) via the transmitted reference (5b) in case of the user of the terminal (2) uses (ST) a start button present within the transmitted content (5a) of the requested website (5) displayed on the user terminal (2) in order to play the video content,
- transmitting (T) a video (9) in a format playable on the iOS based user terminal (2) comprising the content of the original flash video to the user terminal (2) by the second server (6) in response to the use of the start button displayed on the user terminal (2), and
- playing (PL) the transmitted video on the iOS based user terminal (2).

12. The method as claimed in claim 11, further comprising the step of executing a software application on the first server (4) providing access (PA) to requested websites (5, 5') to analyze the requested website (5, 5') in order to recognize (R) present flash video objects.

13. The method as claimed in claim 11 or 12, **characterized in that** the reference (5b) is not visible to users.

14. The method as claimed in any of claims 1, further comprising the step of transmitting the reference to the user terminal as a modified URL.

15. The method as claimed in any of claims 14, further comprising the steps of generating and adding a video tag markup as a domain prefix to the URL pointing to the second server allowing the browser of the user terminal to consume the content of the requested website without displaying any messages related to flash videos.
